Europäisches Patentamt

European Patent Office

Office européen des brevets

(11) Veröffentlichungsnummer: **0 349 854**
**A1**

## (12) EUROPÄISCHE PATENTANMELDUNG

(21) Anmeldenummer: **89111500.8**

(22) Anmeldetag: **23.06.89**

(51) Int. Cl.⁴: **G01R 31/28 , G06F 11/22**

(30) Priorität: **05.07.88 DE 3822761**

(43) Veröffentlichungstag der Anmeldung:
**10.01.90 Patentblatt 90/02**

(84) Benannte Vertragsstaaten:
**AT BE CH DE ES FR GB IT LI NL SE**

(71) Anmelder: **Siemens Aktiengesellschaft**
**Wittelsbacherplatz 2**
**D-8000 München 2(DE)**

(72) Erfinder: **Föhrenbacher, Franz**
**Schubertstrasse 11 B**
**D-7514 Eggenstein(DE)**

(54) Verfahren zur Prüfung einer elektronischen Baugruppe.

(57) Die Erfindung betrifft ein Verfahren zur Prüfung einer elektronischen Baugruppe, bei dem Prüfpunkte auf der Baugruppe adaptiert werden und durch Vergleich mit einem Fehlerkatalog auf vorhandene Fehler untersucht werden können. Um eine schnelle Fehlerortsbestimmung auch auf komplexen Baugruppen durchzuführen, werden an zentralen inneren Prüfpunkten Signaturregister aufgeschaltet, die zusätzlich zur Auswertung mit dem Fehlerkatalog herangezogen werden.

Die Erfindung ist vor allem bei der Prüfung von komplexen Baugruppen in der Fertigung elektronischer Geräte anwendbar.

EP 0 349 854 A1

Verfahren zur Prüfung einer elektronischen Baugruppe

Technisches Gebiet

Die Erfindung betrifft ein Verfahren zur Prüfung einer elektronischen Baugruppe gemäß dem Oberbegriff des Anspruchs 1.

Stand der Technik

Bei bekannten Funktionsprüfautomaten (Zeitschrift "Elektronik" 6/1988, Seiten 139 bis 143 "Test-Strategien auf dem Weg in die 90er Jahre") für elektronische Baugruppen ist der Aufwand, bis eine erste Aussage darüber getroffen ist, ob eine Baugruppe fehlerfrei oder fehlerhaft ist, gering gegenüber der eigentlichen Fehlerortsbestimmung bei fehlerhaften Baugruppen. Der Hauptgrund für die doch recht schnelle Aussage über Funktion und Nichtfunktion ist abhängig von der Komplexität der Baugruppe und daher von der Länge des Prüfprogrammes, so daß der Anwender normalerweise nur das Prüfprogramm starten muß und dann das Prüfergebnis automatisch am Ende des Prüfprogrammlaufes ausgegeben wird. Die Verweilzeit des Prüflings am Prüfautomat entspricht dann der reinen Prüfprogrammlaufzeit.

Es sind unterschiedliche Verfahren zur Fehlerortsbestimmung, mit denen die auftretenden Fehler eingegrenzt oder genau lokalisiert werden können, bekannt.

Es ist beispielsweise üblich, Fehlerortsbestimmungen durch Signalüberprüfung an inneren Schaltungspunkten mit externen Meßgeräten, wie Oszilloskop, Logikanalysator etc., durchzuführen. Der Zeitaufwand ist in den meisten Fällen sehr hoch, und das Prüfpersonal muß hochqualifiziert sein, da die Funktion der Schaltung verstanden sein muß. Das Prüfsystem leistet hierbei keine Unterstützung.

Fehlerortsbestimmungen durch Incircuit-Test-Methoden sind weiterhin geläufig. Der Fehlerort wird schnell und sicher ermittelt, da jeder Knoten über Nadeladapter kontaktiert wird. Es ist jedoch bei Fortschreiten der Komplexität der Baugruppen schwieriger, jeden Knoten zu kontaktieren, da die Leiterbahnabstände immer geringer werden und die Oberflächenbestückungs-Technik ein beidseitiges Bestücken gestattet. Das sogenannte "Backdriving"-Verfahren, wie es bei Incircuit-Testern üblich ist, zur Eliminierung der übrigen Schaltungsteile stellt den Anwender dabei vor weitere Probleme. Dynamische Fehler sowie Parameterfehler und Fehler im Zusammenspiel der einzelnen Komponenten können im Gegensatz zu Kurzschlüssen zu Nachbarleitungen bzw. Pins hiermit jedoch nicht gefunden werden.

Weiterhin sind Fehlerortsbestimmungen nach der Störpfadverfolgungsmethode üblich, die, ausgehend von einem sogenannten GO/NOGO-Prüfautomaten ermittelten Prüflingsfehlerbild, entgegen der Signalflußrichtung den fehlerverursachenden Knoten bestimmt. Bei dieser Art der Fehlerlokalisierung stehen dem Anwender zwei verschiedene Möglichkeiten zur Verfügung, nämlich der Vergleich von prüfschrittorientierten Soll- und Istdaten und der Vergleich von Signaturdaten.

Prüfschrittorientierte Daten beinhalten den logischen Zustand eines Knotens in jedem Prüfschritt. Sie werden in den meisten Fällen komprimiert abgelegt und zum Vergleich wieder in den ursprünglichen Zustand zurückversetzt. Der Soll-/Istvergleich wird für jeden Prüfschritt einzeln durchgeführt.

Signaturdaten dagegen sind komprimierte Daten von der Länge des verwendeten Signaturregisters. Es kann kein Bezug mehr von Prüfschritt und logischem Zustand nach der Komprimierung hergestellt werden. Die Zeitbezogenheit geht also verloren. Beim Fehlersuchlauf werden nur die abgespeicherten Sollsignaturen mit den gemessenen Signaturen verglichen.

Die Sollwerte für die beiden Verfahren werden entweder per Simulation oder durch Lernen an einer Bezugsbaugruppe, einem sogenannten "golden board", erzeugt. Die Datenaufnahme beim Lernen und bei der späteren Fehlerpfadverfolgung erfolgt mittels systemgeführter Tastspitze. Beide Verfahren können sehr zeitintensiv sein und enden auf Knotenebene. Kurzschlüsse zu Nachbarpins bzw. Leitungen können damit nicht diagnostiziert werden.

Eine wichtige Methode ist die Fehlerortsbestimmung mit Hilfe eines Fehlerkataloges, der aus Fehlersimulationsdaten erzeugt wird. Dies ist die schnellste Methode, wenn der Fehlerkatalog vollständig und eindeutig ist. Die Auswertung erfolgt softwaremäßig. Der fehlerverursachende Ort wird aufgrund eines vom Prüfautomaten gelieferten Fehlerbildes, welches hier fehlerhafte Signale pro Prüfschritt darstellt, ermittelt. Da es nur selten vollständige Fehlerkataloge gibt und diese mehrdeutige Fehlerbilder beinhalten, führt diese Methode nur bedingt zum Ziel. Zur Verifizierung der Aussage des Kataloges muß hierbei mindestens eine Kontaktierung durchgeführt werden. Kurzschlüsse zu Nachbarleitungen bzw. Pins können mit dieser Methode jedoch nicht gefunden werden.

Möglich ist auch eine Kombination von Fehlerkatalog und Störpfadmethode. Tritt ein Fehlverhalten am Prüfling auf, so wird zuerst der Fehlerkatalog auf mögliche Aussagen untersucht. Wenn der Fehlerkatalog zum entsprechenden Fehlerbild ein oder mehrere fehlerverursachende Pins meldet, werden diese an den Störpfadalgorithmus zur Überprüfung weitergegeben. Wird bei dieser Verifikation kein Fehler an den jeweiligen Pins festgestellt, so beginnt der Störpfadalgorithmus an einem vom Prüfsystem als fehlerhaft gemeldeten Ausgangspin mit der Pfadverfolgung. Das gleiche gilt bei Nichtvorhandensein eines Fehlerbildes im Fehlerkatalog.

Das Zusammenwirken beider Methoden beschleunigt die Lokalisierung des fehlerverursachenden Knotens bzw. Pins. Es sind jedoch immer noch Kontaktierungen mit der Tastspitze notwendig, wobei jede Kontaktierung einen erneuten Prüfprogrammlauf erfordert. Kurzschlüsse zu Nachbarleitungen bzw. Pins können auch hierbei nicht exakt diagnostiziert werden.

Darstellung der Erfindung

Der Erfindung liegt folgendes Problem zugrunde:
Werden Fehler auf der Baugruppe detektiert, ist es wichtig, die Ursache festzustellen. Dies sollte mit vertretbarem Zeitaufwand erreicht werden und ohne hochqualifiziertes Personal zu benötigen. Da die Baugruppen in Zukunft noch komplexer werden, sollte bei der Fehlerfindung durch Optimierung die Verweilzeit möglichst kurz und die Ansprüche an das Personal gering gehalten werden.

Zur Lösung dieser Probleme weist ein Verfahren der eingangs angegebenen Art die kennzeichnenden Merkmale des Anspruchs 1 auf und wird mit den Merkmalen der Unteransprüche 2 und 3 fortgebildet.

In vorteilhafter Weise kann mit dem erfindungsgemäßen Verfahren eine Reduzierung der Anzahl der Kontaktierungen auf ein Minimum oder den Verzicht auf Kontaktierungen mit der Tastspitze dadurch erreicht werden, daß an zentralen inneren Schaltungspunkten Signaturregister aufgeschaltet werden. Eine Auswertung der Signaturen erfolgt nur dann,

a) wenn bei Verwendung eines Fehlerkataloges aufgrund äquivalenter Fehler keine eindeutige Aussage über den fehlerverursachenden Knoten gemacht werden kann;

b) wenn der Fehlerkatalog aus Gründen der Nichtexistenz des Fehlerbildes keine Aussage machen kann oder wenn kein Fehlerkatalog existiert (wie im Anspruch 4 angegeben);

c) wenn der aus dem Fehlerkatalog ermittelte Fehlerort direkt mit einem Signaturregister verbunden ist.

Die Signaturregister, wie sie z. B. in der Zeitschrift "Elektronik" 14/1983, Seiten 31 bis 35 "Die Signaturanalyse" beschrieben sind, haben eine reine "Mithörfunktion". Die Anzahl ist vom Anwender frei wählbar. Die Adaption erfolgt über einen Nadeladapter, wobei im Gegensatz zum Incircuit-Test nicht jeder Bausteinpin kontaktiert werden muß. Die notwendigen Schaltungspunkte können mit Hilfe eines Schaltungs-Analyseprogrammes festgelegt oder vom Anwender als Zusatzinformationen dem System mitgeteilt werden.

Kurze Beschreibung der Erfindung

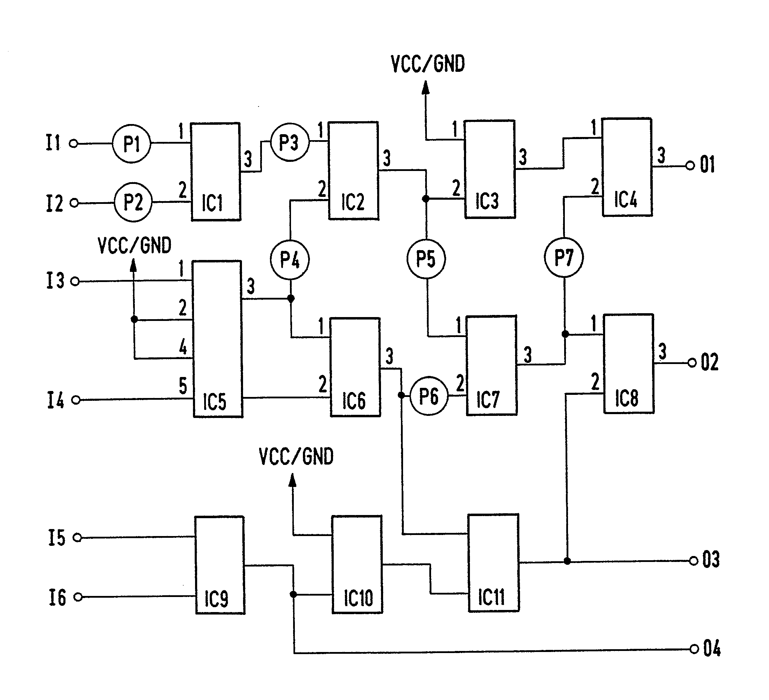

Die Erfindung wird anhand der Figur erläutert, die ein Prinzipschaltbild einer zu prüfenden Baugruppe mit Prüfpunkten zeigt.

Bester Weg zur Ausführung der Erfindung

Auf der in der Figur dargestellten Baugruppe sind eine Reihe Bausteine IC1 ... IC11 mit Anschlüssen 1 bis 5 vorhanden. Es sind äußere Anschlußpunkte O1 ... O4 und I1 ... I6 sowie Prüfpunkte bzw. Knoten P1 ... P7 und eine Spannungsversorgung VCC/GND vorhanden.

Es ist folgende Vorgehensweise in den drei Fällen, die zu einer Auswertung der Signaturregister führen, möglich:

a): Äquivalente Fehler können im Fehlerkatalog nicht mehr weiter unterschieden werden. Sie liefern alle am Prüflingsausgang dasselbe Fehlerbild.

Beispiel 1):

| Fehlerbild-Prüfschritt | 1 | O1/HI |
| | 2 | O1/HI |
| | 3 | O1/HI |
| | 4 | O1/HI-O2/HI |
| mögliche Fehlerorte: | I1 | = Knoten Nr. P1 |
| | IC1.1 | = Knoten Nr. P1 |
| | I2 | = Knoten Nr. P2 |
| | IC1.2 | = Knoten Nr. P2 |
| | IC1.3 | = Knoten Nr. P3 |
| | IC2.1 | = Knoten Nr. P3 |
| | IC2.2 | = Knoten Nr. P4 |
| | IC2.3 | = Knoten Nr. P5 |
| | IC7.1 | = Knoten Nr. P5 |
| | IC7.2 | = Knoten Nr. P6 |
| | IC7.3 | = Knoten Nr. P7 |

In diesen Fällen können sieben verschiedene Knoten P1 ... P7 fehlerhaft sein. Dies hat zur Folge, daß im ungünstigsten Fall sieben Kontaktierungen mit der Tastspitze der Störpfadverfolgungsmethode notwendig sind, um den fehlerverursachenden Knoten zu lokalisieren.

Steht nun pro Knoten ein Signaturregister zur Verfügung, so wird der fehlerverursachende Knoten ohne eine einzige zusätzliche Kontaktierung (mit der Tastspitze) ermittelt. Dies kann auf zwei Arten geschehen:

I): Die bereits bestehende Störpfadmethode überprüft von dem Knoten aus, der am nächsten zum Prüflingsausgang liegt, jeden Knoten durch Vergleich der Soll- und der Istsignatur. Der fehlerhafte Knoten, der in Signalflußrichtung nach dem ersten fehlerfreien Knoten liegt, ist der fehlerverursachende. Die Störpfadmethode muß jeweils überprüfen, ob für den nächsten zu überprüfenden Knoten ein Istdatum in Form von einer Signatur vorliegt.

II): Vergleich aller sieben Signaturregister-Istdaten mit ihren Referenzdaten. Alle diejenigen, die eine Abweichung aufweisen, werden daraufhin untersucht, ob sie von einem anderen fehlerhaften Knoten abhängig sind oder nicht. Derjenige, der von keinem anderen fehlerhaften abhängig ist, ist der fehlerverursachende. Dies können in bestimmten Fällen auch mehrere sein.

Beispiel 2):

Melden sich nur die Knoten P3, P5 und P7 mit Abweichung, so ist Knoten P3 der fehlerverursachende, da er von keinem anderen fehlerhaften Knoten abhängig ist.

Beide Vorschläge führen zum Ziel, wenn alle Knoten, die der Fehlerkatalog als potentielle Fehlerorte angibt, mit Signaturregistern verbunden sind. Ist dies nicht der Fall, so muß mit der Tastspitze der Störpfadmethode weitergesucht werden. In diesem Fall ist der Vorschlag I vorzuziehen, da die Störpfadmethode nur um den Signaturdatenvergleich und Auswerteroutinen erweitert werden muß.

b): Wenn das entsprechende Fehlerbild nicht im Fehlerkatalog existiert, kann dies folgende Ursachen haben:

I) Der Fehlerkatalog wurde nicht vollständig berechnet (unvollständiger Fehlerkatalog).

II) Das Fehlerbild, welches vom Prüfbetriebssystem geliefert wurde, entstand aufgrund von Mehrfachfehlern.

Da in beiden Fällen sowie bei Nichtexistenz eines Fehlerkataloges vom Fehlerkatalog-Auswertealgorithmus keine Unterstützung zu erwarten ist, müssen nun alle Signaturpins der gesamten Schaltung überprüft werden. Durch ein Soll-/Istvergleich aller Signaturpins werden die fehlerhaften Knoten ausselektiert. Diese fehlerhaften Knoten werden auf Abhängigkeiten von anderen fehlerhaften Knoten untersucht. Ist ein als fehlerhaft gemeldeter Signaturknoten von keinem anderen fehlerhaften abhängig, so wird er als Quellfehlerknoten bezeichnet. Dieser Quellfehlerknoten wird nun daraufhin untersucht, ob diejenigen Knoten, die auf diesen wirken, mit Signaturpins verbunden sind, die als "gut" gemeldet wurden. Ist dies der Fall, ist der Quellfehlerknoten gleichzeitig der fehlerverursachende. Andernfalls wird dieser Quellfehlerknoten als Pfadaufsetzpunkt (Startpunkt) an die Störpfadmethode übergeben.

Beispiel 2a):

| Signaturregister an Knoten | = P3, P4, P5, P6, P7 |
|---|---|
| fehlerhafte Signaturregister-Knoten | = P7, P5, P3 |
| nach Analyse = = => Quellknoten | = P3 |
| auf Knoten P3 wirken | = P1, P2 |

Da beide keine Verbindung zu Signaturregistern haben, wird der Knoten P3 als Pfadaufsetzpunkt an die Störpfadmethode übergeben.

Sind beide "gut" heißt dies, der Knoten P3 ist der für die Enddiagnose zu betrachtende Knoten.

Beispiel 2b):

| Signaturregister an Knoten | = P3, P4, P6, P7 |
|---|---|
| fehlerhafter Signaturregister-Knoten | = P7 |
| auf Knoten P7 wirken | = P5, P6 |

Knoten P6 ist "gut"

Knoten P5 wird als Pfadaufsetzpunkt übergeben und überprüft.

Wenn P5 fehlerhaft ist heißt dies, die Knoten P3 und P4 sind zu überprüfen.

Da Signaturen vorliegen, wird nicht kontaktiert.

Wenn beide "gut" sind, ist der Knoten P5 der für die Enddiagnose zu betrachtende Knoten.

Ist der Knoten P3 oder Knoten P4 schlecht, so wird dieser schlechte Knoten als neuer Pfadaufsetzpunkt gewertet, da kein Signaturregister im möglichen weiteren Fehlerpfadverlauf angeschlossen ist.

Zu c): Wird von seiten des Fehlerkataloges ein Knoten aufgrund des Fehlerbildes eindeutig als Fehlerort identifiziert, so genügt bei dem Signaturvergleich das Meßergebnis "schlecht", um diesen Knoten als den für die Enddiagnose zu betrachtenden Knoten festzulegen. Weicht die Soll- von der Istsignatur jedoch nicht ab, so ist für das ermittelte Fehlerbild am Prüflingsausgang der Fehlerkatalog nicht vollständig. Es ist dann, wie unter b) beschrieben, zu verfahren.

Es gibt zwei Möglichkeiten der Auswertung im Fehlerfall:

a) Auswertung der Ist- und der Sollsignatur über den gesamten Prüfschrittbereich, der für die Fehlersuche relevant ist. Dies bedeutet, daß trotz der aufgetretenen NOGO-Meldung des ablaufenden Prüfprogrammes nicht abgebrochen wird, sondern über den NOGO-Schritt bis zum Ende durchgefahren wird. Eine Aufnahme der Daten für diesen Bereich erfolgt nur noch bei den Signaturregistern.

Der Vorteil dieser Vorgehensweise ist der, daß für jeden Pin, der mit einem Signaturregister verbunden ist, ein einziges Solldatum für alle auftretenden Fehlerfälle abgelegt werden muß.

Dieses Solldatum kann nun an einem "golden board" durch Lernen aufgenommen oder durch Simulation erzeugt werden. In beiden Fällen handelt es sich um eine einmalige Aktion am Ende der DEBUG-Phase, die so lange Gültigkeit hat, solange keine Änderung an den Prüfdaten vorgenommen wird. Pro gemessenen Pin gibt es ein einziges Solldatum von der Länge des Signaturregisters.

Die Aufnahme der Sollsignatur erfolgt nur über die für die Fehlersuche relevanten Prüfschritte.

b) Auswertung der Ist- und der Sollsignatur bis zum gemeldeten NOGO-Prüfschritt. Da die Signatur parallel zum Prüfprogrammlauf aufgenommen wird, wird das Signaturregister mit dem NOGO-Prüfschritt geschlossen und zur Auswertung ausgelesen. Die Sollsignatur wird aus den simulierten oder gelernten prüfschrittorientierten Knotensolldaten der Störpfadverfolgungsmethode gewonnen. Die Berechnung wird nur bis zu dem Prüfschritt durchgeführt, der vom Prüfbetriebssystem als erster fehlerhafter Prüfschritt gemeldet wird. Dies hat zur Folge, daß die Sollsignatur nur im Bedarfsfalle berechnet wird.

Eine weitere Möglichkeit wäre die, daß sämtliche Sollsignaturen für jeden fehlersuchrelevanten Prüfschritt bei der Datenerstellung berechnet und anschließend abgespeichert werden. Dies ergibt jedoch eine sehr große Datenmenge, da sich die Gesamtanzahl der Signaturen aus der Multiplikation der Menge der fehlersuchrelevanten Prüfschritte und der Anzahl der Signaturpins zusammensetzt. Bei 10 000 Prüfschritten und 200 Pins sind dies 2 000 000 Einzelsignaturen.

Stehen genügend Signaturpins, die billig sind gegenüber normalen Empfängerpins, zur Verfügung, so kann in den meisten Fällen eine Kontaktierung mit der "knotenselektiven" Fehlersuche entfallen und die Information direkt an ein darauffolgendes, sogenanntes "beyond the node"-Verfahren zur exakten Bestimmung des fehlerverursachenden Ortes, z. B. ein defektes Bauteil, Kurzschluß usw., weitergegeben werden.

Eine Optimierung kann weiter dadurch erzielt werden, daß man Fehlersignaturen mit Prüflingsausgangsinformationen über fehlerhafte Pins kombiniert und beides zugeordnet zu einem bestimmten Fehlerort zur weiteren Auswertung abspeichert. Dadurch kann man die Anzahl der notwendigen Signaturregister optimieren, was an kritischen Punkten in der Schaltung Adaptionsprobleme verhindern hilft.

Es gibt zwei Arten der Vorgehensweise:

- Wurde ein bestimmter Fehlerort genau lokalisiert und anschließend die Diagnose durch erfolgreiche Reparatur bestätigt, so muß der Anwender das Prüflingsfehlerbild zusammen mit der Fehlersignatur eines oder mehrerer Signaturregister im "Erfahrungskatalog" ablegen, wenn diese nicht schon existieren. Bei der späteren Auswertung wird zuerst das Prüflingsfehlerbild überprüft und bei Übereinstimmung die Fehlersignaturen verglichen. Der zugeordnete Fehlerort muß nun durch eine Messung bestätigt werden. Tritt nun am vorgeschlagenen Fehlerort keine Soll-/Istabweichung auf, so muß für die Fehlerinformation (Prüflingsfehlerbild-Fehlersignatur) ein neuer möglicher Fehlerort hinzugefügt werden, der durch die Pfadverfolgungsmethode ermittelt wird. Um nun bei der Fehlerinformations-Gleichheit (d. h. mehrere Fehlerorte pro Fehlerinformation) den Fehlerort mit der größten Wahrscheinlichkeit zuerst prüfen zu können, wird für jeden ermittelten Fehlerort die Anzahl der "Treffer" pro Anzahl "Versuche" abgelegt und im Bedarfsfalle ausgewertet.

-Die Zuordnung: Prüflingsfehlerbild - Fehlersignatur - möglicher Fehlerort kann über die Fehlersimulation berechnet werden. Die Ergebnisse werden im Fehlerkatalog abgelegt und bei Bedarf ausgewertet, wie im ersten Fall beschrieben.

Die Fehlersignaturauswertung ist nur sinnvoll, wenn nur wenige ausgesuchte innere Schaltungsknoten mit Signaturregister verbunden sind und eine Verknüpfung mit Prüflingsfehlerbildern hergestellt werden kann. Diese Signaturpunkte müssen sorgfältig durch Analyseprogramme ermittelt und optimiert werden.

Zum Nachweis von Kurzschlüssen zwischen Pins oder Leitungen können die beiden folgenden Wege eingeschlagen werden:

1): Aufnahme der prüfschrittorientierten Knotendaten am letzten "fehlerhaft" gemessenen Pin über alle fehlersuchrelevanten Prüfschritte und Abspeichern der Daten als neues Referenzdatum. Dieses dient als Solldatum zum Vergleich mit Pins oder Nachbarleitungen: Diese Pins oder Nachbarleitungen werden aus den Layout-Daten der Baugruppe ermittelt. Mit Hilfe eines Schaltungsanalyseprogrammes werden diese benachbarten Knoten untersucht, ob sie möglicherweise in der gleichen Schleife liegen wie der "fehlerhafte" Referenzknoten. In Schleifen ohne speichernde Bauteile haben verschiedene Knoten das gleiche Verhalten, obwohl kein direkter Kurzschluß vorliegt. An diesen Knoten kann keine exakte Diagnose gestellt werden.

2): Vergleich der Signaturen aller benachbarten Leitungen oder Pins mit der Fehlersignatur des letzten "fehlerhaften" Pins bzw. Knotens. Bei Übereinstimmung besteht dringender Verdacht auf Kurzschluß. Eine Bestätigung oder eine Aufhebung des Verdachtes muß mit Hilfe der prüfschrittorientierten Fehlersuche, wie unter Punkt 1) beschrieben, durchgeführt werden. Zu diesem Zweck werden nur die beiden "verdächtigen" Knoten kontaktiert.

Ein Kurzschluß liegt dann vor, wenn das Referenzdatum des "gestörten" Knotens mit dem Istwert des gemessenen Nachbarknotens eindeutig übereinstimmt.

Die Fehlersuche-Lösung für ein Funktionsprüfsystem setzt sich daher aus folgenden Teilen zusammen, wobei der optimale Lösungsweg von einem übergeordneten Datenverarbeitungssystem mit künst licher Intelligenz ermittelt wird:

1) Erfahrungskatalog (bestehend aus OUTPUT-Fehlerbildern + Fehlersignatur)

2) Fehlerkatalog (bestehend aus OUTPUT-Fehlerbildern)

3) Störpfadverfolgungsmethode (prüfschrittorientiert kombiniert mit Signaturvergleich an fest verbundenen Signaturregistern)

4) "beyond the node"-Verfahren

Gewerbliche Anwendbarkeit

Die Erfindung ist vor allem bei der Prüfung von komplexen Baugruppen in der Fertigung elektronischer Geräte anwendbar.

**Ansprüche**

1. Verfahren zur Prüfung einer elektronischen Baugruppe, bei dem
- Prüfpunkte auf der Baugruppe mit einem Nadeladapter adaptiert werden,
- die adaptierten Signale ausgewertet und durch Vergleich mit Werten aus einem Fehlerkatalog die fehlerverursachenden Bauteile bzw. der Fehlerort ermittelt werden,

**dadurch gekennzeichnet,** daß
- an einer Anzahl von Prüfpunkten (Knoten) (P1 ... P7) Signaturregister aufgeschaltet werden, die zur Auswertung herangezogen werden, wenn
- die Auswertung anhand des Fehlerkatalogs nicht zu einem schnellen Ergebnis führt.

2. Verfahren nach Anspruch 1, **dadurch gekennzeichnet,** daß
- die Signaturregister aufgeschaltet werden, wenn
- durch Vergleich mit den Werten aus dem Fehlerkatalog keine eindeutige Aussage über das fehlerverursachende Bauteil bzw. den Fehlerort gemacht werden kann.

3. Verfahren nach Anspruch 1, **dadurch gekennzeichnet,** daß
- die Signaturregister aufgeschaltet werden, wenn
- das aus dem Fehlerkatalog ermittelte Bauteil (IC1 ... IC11) bzw. der Fehlerort direkt mit einem Signaturregister verbunden ist.

4. Verfahren zur Prüfung einer elektronischen Baugruppe, bei dem
- Prüfpunkte auf der Baugruppe mit einem Nadeladapter adaptiert werden,
- die adaptierten Signale ausgewertet und durch Vergleich mit Werten aus einem Fehlerkatalog die fehlerverursachenden Bauteile bzw. der Fehlerort ermittelt werden,
**dadurch gekennzeichnet,** daß
- an einer Anzahl von Prüfpunkten (Knoten) (P1 ... P7) Signatur register aufgeschaltet werden, die zur Auswertung herangezogen werden, wenn
- ein Fehlerkatalog aus Gründen der Nichtexistenz eines Fehlerbildes keine Aussage machen kann oder wenn kein Fehlerkatalog existiert.

P 4439

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DIGEST OF PAPERS OF THE 1981 INTERNATIONAL TEST CONFERENCE, Philadelphia, 27.-29. Oktober 1981, pages 253-269, IEEE, New York, US; S. KOCHAN et al.: "Computer-guided probing techniques" <br> * Seite 253, linke Spalte, Zeile 15 - Seite 254, linke Spalte, Zeile 37; Seite 256, rechte Spalte, Zeilen 8-32; Seite 258, rechte Spalte, Zeile 54 - Seite 259, linke Spalte, Zeile 17 * <br> --- | 1,4 | G 01 R 31/28 <br> G 06 F 11/22 |
| A | PROCEEDINGS OF THE IEEE INTERNATIONAL AUTOMATIC TESTING CONFERENCE, AUTOTESTCON '86, San Antonio, Texas, 8.-11. September 1986, Seiten 117-124, IEEE, New York, US; V. RATFORD et al.: "Integrating guided probe and fault dictionary: an enhanced diagnostic approach" <br> * Seite 117, linke Spalte, Zeile 1 - Seite 118, linke Spalte, Zeile 34; Seite 120, rechte Spalte, Zeile 1 - Seite 122, rechte Spalte, Zeile 3 * <br> --- | 1,4 | |
| A | GB-A-2 019 012 (NCR) <br> * Seite 11, Zeile 33 - Seite 13, Zeile 15 * <br> ----- | 1,4 | |

RECHERCHIERTE SACHGEBIETE (Int. Cl.5)

G 01 R 31/28
G 06 F 11/22
G 06 F 11/26

Der vorliegende Recherchenbericht wurde für alle Patentansprüche erstellt

| Recherchenort | Abschlußdatum der Recherche | Prüfer |
|---|---|---|
| DEN HAAG | 27-09-1989 | HERREMAN,G.L.O. |